# EUROPEAN PATENT APPLICATION

(11) **EP 4 120 729 A1**
(43) Date of publication of application: **18.01.2023**
(21) Application number: 20923898.9
(22) Date of filing: 13.03.2020
(51) Int. Cl.: H04W 28/04, H04W 4/40, H04W 72/04

(54) **TERMINAL AND COMMUNICATION METHOD**

(71) Applicant: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP)
(74) Representative: Hoffmann Eitle
(86) International application number: PCT/JP2020/011295
(87) International publication number: WO 2021/181710

(57) **Abstract**

A terminal including a control unit that determines candidate slots, in which a channel for transmitting and receiving a response related to a retransmission process is arranged, the candidate slots being located before and after a boundary of a cycle of a resource pool, a transmitter that transmits a data channel to another terminal via the resource pool, and a receiver that receives the response related to the retransmission process corresponding to the data channel from the another terminal via the channel for transmitting and receiving the response related to the retransmission process, the channel being configured in one of the candidate slots.

## Description

### [Technical Field]

The present invention relates to a terminal and a communication method in a radio communication system.

### [Background Art]

In the LTE (Long Term Evolution) and successor systems of LTE (e.g., LTE-A (LTE Advanced), NR (New Radio) (also referred to as 5G)), a D2D (Device to Device) technology in which terminals communicate directly with each other without the intervention of a base station is being discussed (e.g., Non-Patent Document 1).

The D2D reduces the traffic between the terminal and the base station, and enables communication between the terminals even when the base station is unable to perform communication in the event of a disaster, etc. Although the 3GPP (3rd Generation Partnership Project) refers to D2D as a "sidelink," the term D2D is used in this specification because the term D2D is more ordinarily used. However, in the description of the embodiment described below, the term "sidelink" is also used as needed.

The D2D communication is broadly classified into: D2D discovery (D2D discovery and D2D discovery) for discovering other terminals capable of communications; and D2D communication (D2D direct communication, D2D communication, direct communication between terminals, etc.) for communicating directly between terminals. Hereinafter, when D2D communication, D2D discovery, etc. are not specifically distinguished, they are simply referred to as D2D. A signal transmitted and received by D2D is called a D2D signal. Various use cases of V2X (Vehicle to Everything) services in NR have been discussed (e.g., Non-Patent Document 2).

### [Prior art documents]

### [Non-patent document]

[Non-Patent Document 1]
   3GPP TS 38. 211 V16. 0. 0(2019-12)
[Non-Patent Document 2]
   3GPP TR 22. 886 V15. 1. 0(2017-03)

### [Summary of Invention]

### [Problem to be solved by the invention]

Direct terminal-to-terminal communication in the NR supports an operation of reporting the HARQ (Hybrid automatic repeat request) response of the sidelink to the base station. The PSFCH (Physical Sidelink Feedback Channel), in which the sidelink HARQ response is sent and received, is arranged in accordance with the configured resource pool. However, it is assumed that a problem with the HARQ response could occur near the boundary of a cycle of the configured resource depending on the arrangement of PSFCH.

The present invention has been made in view of the foregoing, and is intended to appropriately arrange the channel through which the HARQ (Hybrid Automatic Repeat Request) response is transmitted in direct communication between terminals.

### [Means for Solving Problems]

According to the disclosed technique, there is provided a terminal including a control unit that determines candidate slots, in which a channel for transmitting and receiving a response related to a retransmission process is arranged, based on a specific slot, a transmitter that transmits a data channel to another terminal, and a receiver that receives the response related to the retransmission process corresponding to the data channel from the another terminal via the channel for transmitting and receiving the response related to the retransmission process, the channel being configured in one of the candidate slots.

### [Effects of the Invention]

According to the disclosed technique, a channel via which a HARQ response in direct terminal-to-terminal communication is transmitted can be appropriately arranged.

### [Brief Description of Drawings]

FIG. 1 is a drawing illustrating V2X.
FIG. 2 is a diagram illustrating an example (1) of a transmission mode of V2X.
FIG. 3 is a diagram illustrating an example (2) of the transmission mode of V2X.
FIG. 4 is a diagram illustrating an example (3) of the transmission mode of V2X.
FIG. 5 is a diagram illustrating an example (4) of the transmission mode of V2X.
FIG. 6 is a diagram illustrating an example (5) of the transmission mode of V2X.
FIG. 7 is a diagram illustrating an example (1) of a communication type of V2X.
FIG. 8 is a diagram illustrating an example (2) of the communication type of V2X.
FIG. 9 is a diagram illustrating an example (3) of the communication type of V2X.
FIG. 10 is a sequence diagram illustrating an example (1) of operation of V2X.
FIG. 11 is a sequence diagram illustrating an example (2) of the operation of V2X.
FIG. 12 is a sequence diagram illustrating an example (3) of the operation of V2X.
FIG. 13 is a sequence diagram illustrating an example (4) of the operation of V2X.
FIG. 14 is a drawing illustrating an example (1) of arrangement of PSFCH.
FIG. 15 is a drawing illustrating an example (2) of the arrangement of PSFCH.
FIG. 16 is a drawing illustrating an example (1) of arrangement of PSFCH according to an embodiment of the present invention.
FIG. 17 is a drawing illustrating an example (2) of the arrangement of PSFCH according to the embodiment of the present invention.
FIG. 18 is a drawing illustrating an example (3) of the arrangement of PSFCH according to the embodiment of the present invention.
FIG. 19 is a drawing illustrating an example (4) of the arrangement of PSFCH according to the embodiment of the present invention.
FIG. 20 is a drawing illustrating an example (5) of the arrangement of PSFCH according to the embodiment of the present invention.
FIG. 21 is a drawing illustrating an example (6) of the arrangement of PSFCH according to the embodiment of the present invention.
FIG. 22 is a drawing illustrating an example (3) of arrangement of PSFCH.
FIG. 23 is a drawing illustrating an example (7) of the arrangement of PSFCH according to the embodiment of the present invention.
FIG. 24 is a drawing illustrating an example (8) of the arrangement of PSFCH according to the embodiment of the present invention.
FIG. 25 is a drawing illustrating an example (9) of the arrangement of PSFCH according to the embodiment of the present invention.
FIG. 26 is a drawing illustrating an example (10) of the arrangement of PSFCH according to the embodiment of the present invention.
FIG. 27 is a drawing illustrating an example of a functional configuration of the base station 10 according to the embodiment of the present invention.
FIG. 28 is a drawing illustrating an example of a functional configuration of the base station 10 according to the embodiment of the present invention.
FIG. 29 is a drawing illustrating an example of a hardware configuration of the base station 10 or the terminal 20 according to the embodiment of the present invention.

### [Mode for Carrying out the Invention]

Hereinafter, embodiments of the present invention will be described with reference to the drawings. The embodiments described below are examples, and the embodiments to which the present invention is applied are not limited to the following embodiments.

In operating a radio communication system according to the embodiment of the present invention, conventional techniques are appropriately used. However, the conventional techniques are, for example, a conventional LTE, but is not limited thereto. The term "LTE" as used herein also has a broad meaning including LTE-Advanced and LTE-Advanced or later forms (e.g., NR) or wireless LAN (Local Area Network), unless otherwise specified.

In addition, in an embodiment of the present invention, a duplexing scheme may be Time Division Duplexing (TDD) scheme, may be Frequency Division Duplexing (FDD) scheme, or may be other schemes (for example, Flexible Duplexing or the like)

Further, in an embodiment of the present invention, "configuring" the wireless parameter or the like may include "pre-configuring" a predetermined value or "pre-configuring" a wireless parameter indicated by the base station 10 or the terminal 20.

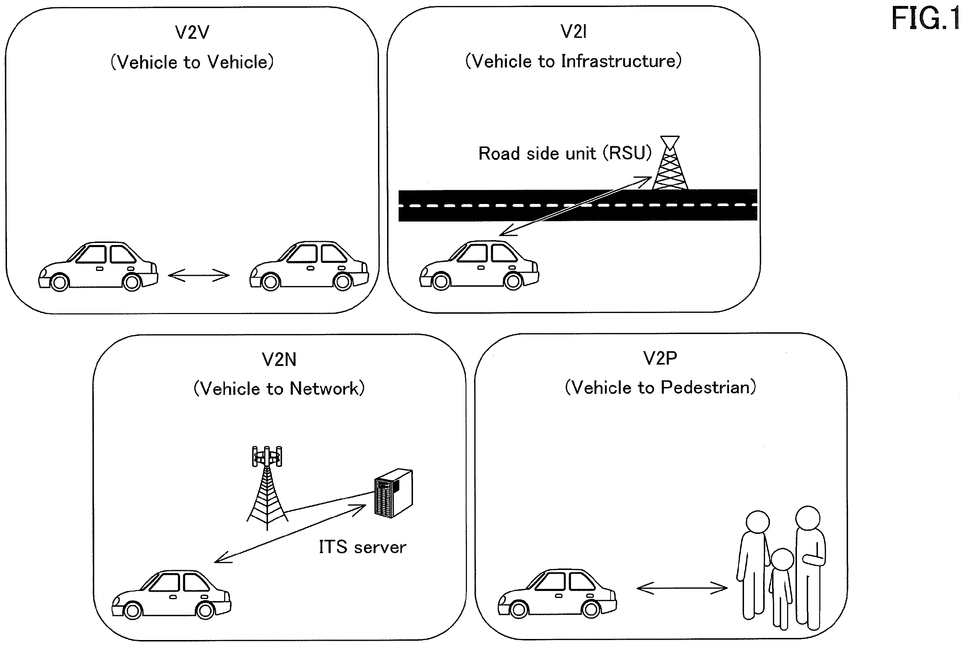

FIG. 1 is a diagram illustrating V2X. In the 3GPP, the D2D function is being extended to realize either V2X (Vehicle to Everything) or eV2X (enhanced V2X) and technical specifications are being developed. As illustrated in FIG. 1, V2X is a collective term for V2V (Vehicle to Vehicle), which is part of ITS (Intelligent Transport Systems), which means the form of communication between vehicles, V2I (Vehicle to Infrastructure), which means the form of communication between vehicles and a road-side apparatus (Road-Side Unit), V2N (Vehicle to Network), which means the form of communication between vehicles and ITS servers, and V2P (Vehicle to Pedestrian), which means the form of communication between vehicles and mobile terminals carried by pedestrians.

In addition, V2X using LTE or NR cellular communication and terminal-to-terminal communication is being studied in 3GPP. V2X using cellular communication is called cellular V2X. NR's V2X is considering realizing large capacity, low delay, high reliability, and QoS (Quality of Service) control.

It is assumed that discussions of the V2X of LTE or NR will not be limited to the 3GPP technical specification development in the future. For example, it is assumed that the discussions will cover ensuring interoperability, cost reduction by implementing the upper layer, the use of multiple RATS (Radio Access Technologies) or switching methods of switching multiple RATS, dealing with regulations in each country, and acquiring, delivering, administering and using the database of the data of V2X platforms in LTE or NR.

In the embodiments of the present invention, it is mainly assumed that the communication apparatus is installed in the vehicle. However, the embodiments of the present invention are not limited thereto. For example, the communication apparatus may be a terminal held by a person, or the communication apparatus may be an apparatus, in which the communication apparatus is installed in a drone or airplane, or the communication apparatus may be a base station, an RSU, a relay station (relay node), a terminal having scheduling capability, or the like.

SL (sidelink) may be distinguished from UL (Uplink) or DL (Downlink), based on one of the following 1)-4), or a combination thereof. The SL may also be another name.
1)Resource allocation in the time domain
2)Resource allocation of the frequency domain
3)Synchronization signal (including SLSS (sidelink Synchronization Signal) to be referred to
4)Reference signal used for pass-loss measurement for transmission power control.

Further, regarding the OFDM (Orthogonal Frequency Division Multiplexing) of SL or UL, either CP-OFDM (Cyclic-Prefix OFDM), DFT-S-OFDM (Discrete Fourier Transform-Spread-OFDM), OFDM without transform precoding or OFDM with the transform precoding may be applied.

In the SL of the LTE, Mode3 and Mode4 are specified for allocating SL resources to the terminal 20. In Mode3, transmission resource is dynamically allocated by the DCI (Downlink Control Information) transmitted from the base station 10 to the terminal 20. In Mode3, SPS (Semi Persistent Scheduling) is also available. In Mode 4, the terminal 20 autonomously selects the transmission resource from the resource pool.

The slot in the embodiment of the present invention may be replaced by the symbol, minislot, subframe, wireless frame, and TTIs (Transmission Time Interval). The cell within the embodiments of the present invention may also be read as cell groups, carrier components, BWPs, resource pools, resources, RAT (Radio Access Technology), system (including wireless LAN), and the like.

According to the embodiment of the present invention, the terminal 20 is not limited to the V2X terminal, but may be any type of terminal that performs D2D communication. For example, the terminal 20 may be a terminal owned by a user, such as a smartphone, or an IoT (Internet of Things) device, such as a smart meter.

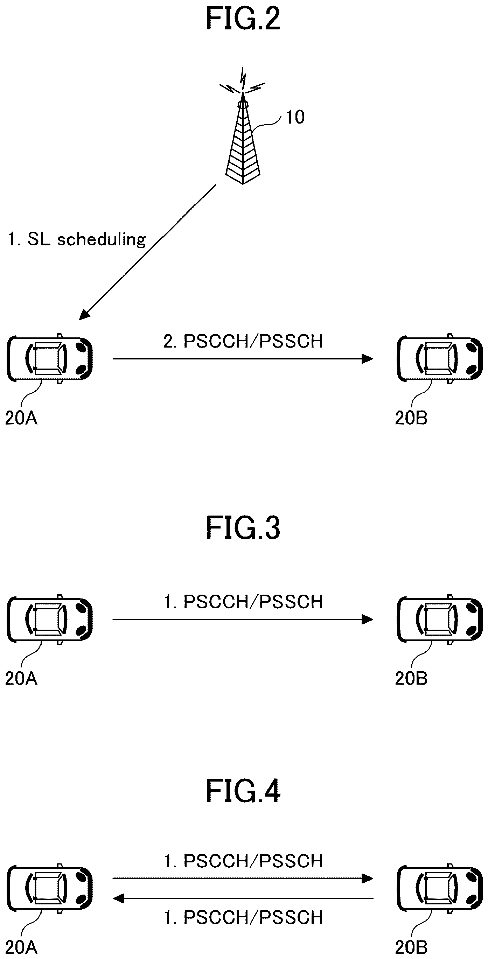

FIG. 2 is a diagram illustrating an example (1) of a transmission mode for the V2X. In the transmission mode for sidelink communication illustrated in FIG. 2, at step 1, the base station 10 transmits a scheduling for a sidelink to the terminal 20A. Then, the terminal 20A transmits a PSCCH (Physical Sidelink Control Channel) and a PSSCH (Physical Sidelink Shared Channel) to the terminal 20B based on the received scheduling (step 2). The transmission mode of the sidelink communication illustrated in FIG. 2 may be referred to as sidelink transmission mode 3 for the LTE. In the sidelink transmission mode 3 for the LTE, Uu based sidelink scheduling is performed. The Uu means a radio interface between a UTRAN (Universal Terrestrial Radio Access Network) and a UE (User Equipment). Note that the transmission mode for the sidelink communication illustrated in FIG. 2 may be referred to as sidelink transmission mode 1 for the NR.

FIG. 3 is a diagram illustrating an example (2) of a transmission mode for the V2X. In the transmission mode for the sidelink communication illustrated in FIG. 3, at step 1, the terminal 20A uses autonomously selected resource to transmit a PSCCH and a PSSCH to the terminal 20B. The transmission mode for the sidelink communication illustrated in FIG. 3 may be referred to as sidelink transmission mode 4 for the LTE. In sidelink transmission mode 4 for the LTE, the UE itself perform resource selection.

FIG. 4 is a diagram illustrating an example (3) of a transmission mode for the V2X. In a transmission mode for the sidelink communication illustrated in FIG. 4, at step 1, the terminal 20A uses an autonomously selected resource to transmit a PSCCH and a PSSCH to the terminal 20B. Analogously, the terminal 20B uses an autonomously selected resource to transmit a PSCCH and a PSSCH to the terminal 20A (step 1). The transmission mode for the sidelink communication illustrated in FIG. 4 may be referred to as sidelink transmission mode 2a for the NR. In the sidelink transmission mode 2 for the NR, the terminal 20 itself performs resource selection.

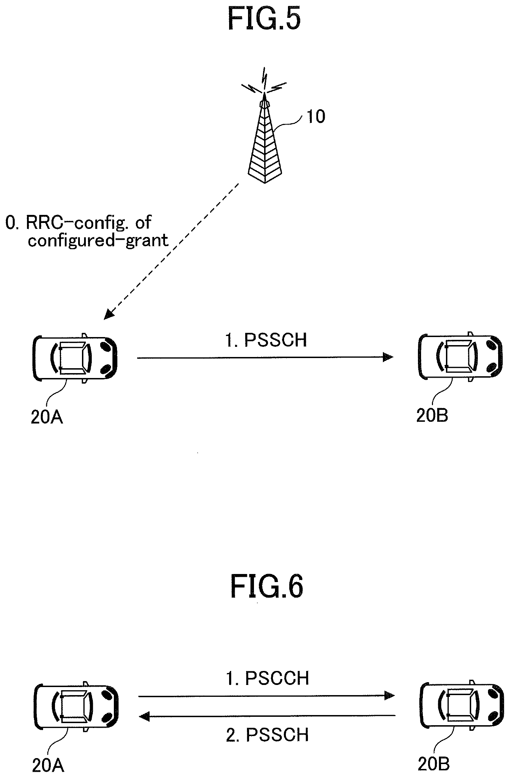

FIG. 5 is a diagram illustrating an example (4) of a transmission mode for the V2X. In the transmission mode for the sidelink communication illustrated in FIG. 5, at step 0, the base station 10 transmits a sidelink grant to the terminal 20A via an RRC (Radio Resource Control) configuration. Then, the terminal 20A transmits a PSSCH to the terminal 20B via received resource pattern (step 1). The transmission mode for the sidelink communication illustrated in FIG. 5 may be referred to as sidelink transmission mode 2c for the NR.

FIG. 6 is a diagram illustrating an example (5) of a transmission mode for the V2X. In a transmission mode for the sidelink communication illustrated in FIG. 6, at step 1, the terminal 20A transmits a sidelink scheduling to the terminal 20B via a PSCCH. Then, the terminal 20B transmits a PSSCH to the terminal 20A based on the received scheduling (step 2). The transmission mode for the sidelink communication illustrated in FIG. 6 may be referred to as sidelink transmission mode 2d for the NR.

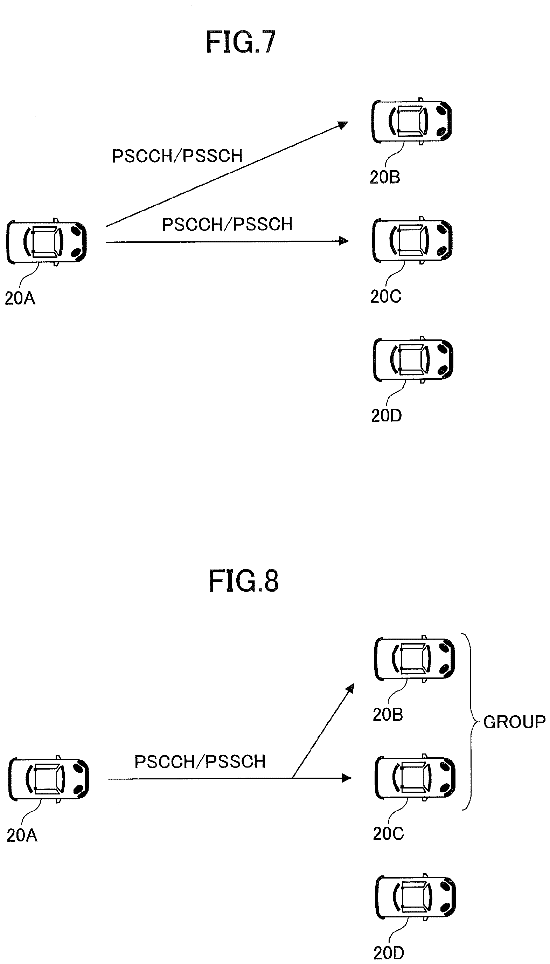

FIG. 7 is a diagram illustrating an example (1) of a communication type of the V2X. The sidelink communication type illustrated in FIG. 7 is a unicast. The terminal 20A transmits a PSCCH and a PSSCH to the terminal 20. In the example illustrated in FIG. 7, the terminal 20A performs unicast for the terminal 20B and also performs a unicast for the terminal 20C.

FIG. 8 is a diagram illustrating an example (2) of a communication type for the V2X. The sidelink communication type illustrated in FIG. 8 is a group cast. The terminal 20A transmits a PSCCH and a PSSCH to a group to which one or more terminals 20 belong. In the example illustrated in FIG. 8, the group includes the terminals 20B and 20C, and the terminal 20A performs a group cast to the group.

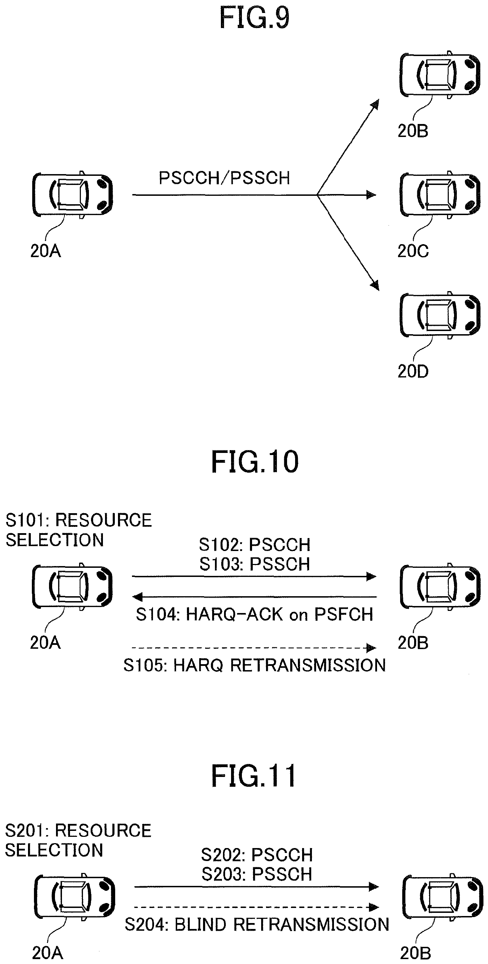

FIG. 9 is a diagram illustrating an example (3) of a communication type for the V2X. The sidelink communication type illustrated in FIG. 9 is a broadcast. The terminal 20A transmits a PSCCH and a PSSCH to one or more terminals 20. In the example illustrated in FIG. 9, the terminal 20A performs a broadcast to the terminals 20B, 20C and 20D. Note that the terminal 20A illustrated in FIGS. 7 to 9 may be referred to as a header UE.

Also, it is assumed in NR-V2X that a HARQ (Hybrid Automatic Repeat Request) is supported for the sidelink unicast and group cast. In addition, SFCI (Sidelink Feedback Control Information) including a HARQ response is defined in the NR-V2X. In addition, it is being discussed that the SFCI is transmitted via a PSFCH (Physical Sidelink Feedback Channel).

Although the PSFCH is used for sidelink transmission of a HARQ-ACK in descriptions below, it is merely an example. For example, a PSCCH may be used to transmit the sidelink HARQ-ACK, a PSSCH may be used to transmit the sidelink HARQ-ACK or other channels may be used to transmit the sidelink HARQ-ACK.

In the following, information reported by the terminal 20 in HARQs is referred to as the HARQ-ACK in general for convenience. The HARQ-ACK may be referred to as HARQ-ACK information. Also, more specifically, a codebook applied to the HARQ-ACK information reported from the terminal 20 to the base station 10 or the like is referred to as a HARQ-ACK codebook. The HARQ-ACK codebook specifies bit sequences of the HARQ-ACK information. Note that not only ACK but also NACK is transmitted in the HARQ-ACK.

FIG. 10 is a diagram illustrating an example (1) of arrangement and operation of a radio communication system according to an embodiment of the present invention. As illustrated in FIG. 10, the radio communication system according to an embodiment of the present invention has terminals 20A and 20B. Note that although large numbers of user equipment are present in the real world, terminals 20A and 20B are exemplarily illustrated in FIG. 10.

In the following, if the terminals 20A, 20B and the like are not particularly distinguished, they are simply described as "terminal 20" or "user equipment". Although the case where both the terminals 20A and 20B are within a coverage of a cell is illustrated in FIG. 10, the operation according to an embodiment of the present invention may be also applied to the case where the terminal 20B is out of the coverage.

As stated above, in the present embodiment, the terminal 20 is a device installed in a vehicle such as a car, for example, and has cellular communication functions and sidelink functions as a UE in the LTE or the NR. The terminal 20 may be a generic mobile terminal (such as a smartphone). Also, the terminal 20 may be a RSU. The RSU may be a UE type of RSU having UE functions or gNB type of RSU having functions of a base station apparatus.

Note that the terminal 20 is not necessarily a device of a single housing, and in a case where various sensors are distributed and installed in a vehicle, for example, the terminal 20 may be a device including those sensors.

Also, processing contents at the terminal 20 for sidelink transmission data are basically similar to those for UL transmission in the LTE or the NR. For example, the terminal 20 scrambles and modulates a codeword of transmission data to generate complex-valued symbols and maps the complex-valued symbols (transmission signal) to one or two layers for precoding. Then, the terminal 20 maps the precoded complex-valued symbols to a resource element to generate a transmission signal (for example, a complex-valued time-domain SC-FDMA signal), and performs transmission from each antenna port.

Note that the base station 10 has cellular communication functions to serve as a base station for the LTE or the NR, and functions (for example, resource pool configuration, resource allocation or the like) that enable communication with the terminal 20 according to the present embodiment. Also, the base station 10 may be an RSU (a gNB type of RSU).

Also, a signal waveform utilized by the terminal 20 in the SL or the UL in the radio communication system according to an embodiment of the present invention, may be OFDMA, SC-FDMA or others.

At step S101, the terminal 20A autonomously selects a resource used for a PSCCH and a PSSCH from a resource selection window having a predetermined period. The resource selection window may be configured to the terminal 20 by the base station 10.

At steps S102 and S103, the terminal 20A uses the resource autonomously selected at step S101 to transmit SCI (Sidelink Control Information) in a PSCCH and SL data in a PSSCH. For example, the terminal 20A may use a time resource that is the same as a time resource of the PSSCH, and a frequency resource that is adjacent to a frequency resource of the PSSCH, to transmit the SCI (PSCCH).

The terminal 20B receives the SCI (PSCCH) and the SL data (PSSCH) transmitted from the terminal 20A. The SCI received in the PSCCH may include PSFCH resource information used for transmitting a HARQ-ACK in response to reception of the data. The terminal 20A may include information of an autonomously selected resource in the SCI, and transmit the SCI.

At step S104, the terminal 20B uses the PSFCH resource indicated by the received SCI, to transmit the HARQ-ACK for the received data, to the terminal 20A.

At step S105, if the HARQ-ACK received at step S104 indicates a request for retransmission, that is, if it is a NACK (negative response), the terminal 20A retransmits the PSCCH and PSSCH to the terminal 20B. The terminal 20A may use the autonomously selected resource to retransmit the PSCCH and PSSCH.

Note that if the HARQ control is not performed, steps S104 and S105 need not be performed.

FIG. 11 is a diagram illustrating an example (2) of arrangement and operation of the radio communication system according to an embodiment of the present invention. Blind retransmission that does not rely on the HARQ control, may be performed so as to improve a transmission success rate or a reachable distance.

At step S201, the terminal 20A autonomously selects a resource to be used for a PSCCH and a PSSCH, from a resource selection window having a predetermined period. The resource selection window may be configured to the terminal 20 by the base station 10.

At steps S202 and S203, the terminal 20A uses the resource autonomously selected at step S201 to transmit SCI via the PSCCH and SL data via the PSSCH. For example, the terminal 20A may use a time resource that is the same as a time resource of the PSSCH, and a frequency resource that is adjacent to a frequency resource of the PSSCH, to transmit the SCI (PSCCH).

At step S204, the terminal 20A uses the resource autonomously selected at step S201 to retransmit the SCI via the PSCCH and the SL data via the PSSCH to the terminal 20B. The retransmission at step S204 may be performed multiple times.

Note that if the blind retransmission is not performed, step S204 need not be performed.

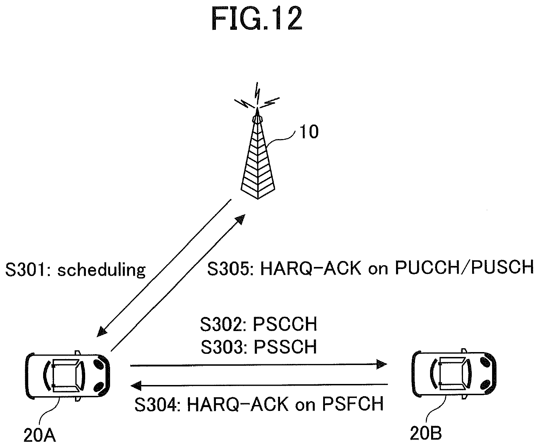

FIG. 12 is a diagram illustrating an example (3) of arrangement and operation of the radio communication system according to an embodiment of the present invention. The base station 10 may perform sidelink scheduling. That is, the base station 10 may determine a resource to be used for sidelink by the terminal 20, and transmit information indicative of the resource to the terminal 20. In addition, if the HARQ control is applied, the base station 10 may transmit information indicative of a PSFCH resource to the terminal 20.

At step S301, the base station 10 performs an SL scheduling for the terminal 20A by transmitting DCI (Downlink Control Information) in a PDCCH. Hereinafter, for convenience, the DCI for the SL scheduling is referred to as SL scheduling DCI.

Also, at step S301, it is assumed that the base station 10 also transmits the DCI for a DL scheduling (may be referred to as DL allocation) in the PDCCH. Hereinafter, for convenience, the DCI for the DL scheduling is referred to as DL scheduling DCI. Upon receiving the DL scheduling DCI, the terminal 20A uses a resource indicated by the DL scheduling DCI to receive DL data in a PDSCH.

At steps S302 and S303, the terminal 20A uses a resource indicated by the SL scheduling DCI to transmit SCI (Sidelink Control Information) in a PSCCH and SL data in a PSSCH. Note that only a resource of the PSSCH may be indicated by the SL scheduling DCI. In this case, for example, the terminal 20A may use a time resource that is same as a time resource of the PSSCH, and a frequency resource that is adjacent to a frequency resource of the PSSCH, to transmit the SCI (PSCCH).

The terminal 20B receives the SCI (PSCCH) and SL data (PSSCH) transmitted from the terminal 20A. The SCI received in the PSCCH includes information regarding a resource of a PSFCH for transmitting a HARQ-ACK in response to reception of the data from the terminal 20B.

The information regarding the resource is included in the DL scheduling DCI or the SL scheduling DCI transmitted from the base station 10 at step S301, and the terminal 20A acquires the information regarding the resource from the DL scheduling DCI or the SL scheduling DCI, and the terminal 20A includes the acquired information in the SCI. Alternatively, the information regarding the resource need not be included in the DCI transmitted from the base station 10, and the terminal 20A may autonomously include the information regarding the resource in the SCI, and transmit the SCI.

At step S304, the terminal 20B uses a resource of the PSFCH indicated by the received SCI to transmit a HARQ-ACK in response to the received data to the terminal 20A.

At step S305, the terminal 20A transmits the HARQ-ACK at a timing (for example, a timing in unit of slot) indicated by the DL scheduling DCI (or the SL scheduling DCI), by using a PUCCH (Physical Uplink Control Channel) resource indicated by the DL scheduling DCI (or the SL scheduling DCI), and the base station 10 receives the HARQ-ACK. A codebook of the HARQ-ACK may include: the HARQ-ACK received from the terminal 20B; and the HARQ-ACK in response to DL data. Note that the HARQ-ACK in response to the DL data need not be included in the case where, for example, no DL data is allocated.

Note that if HARQ control is not performed, steps S304 and S305 need not be performed.

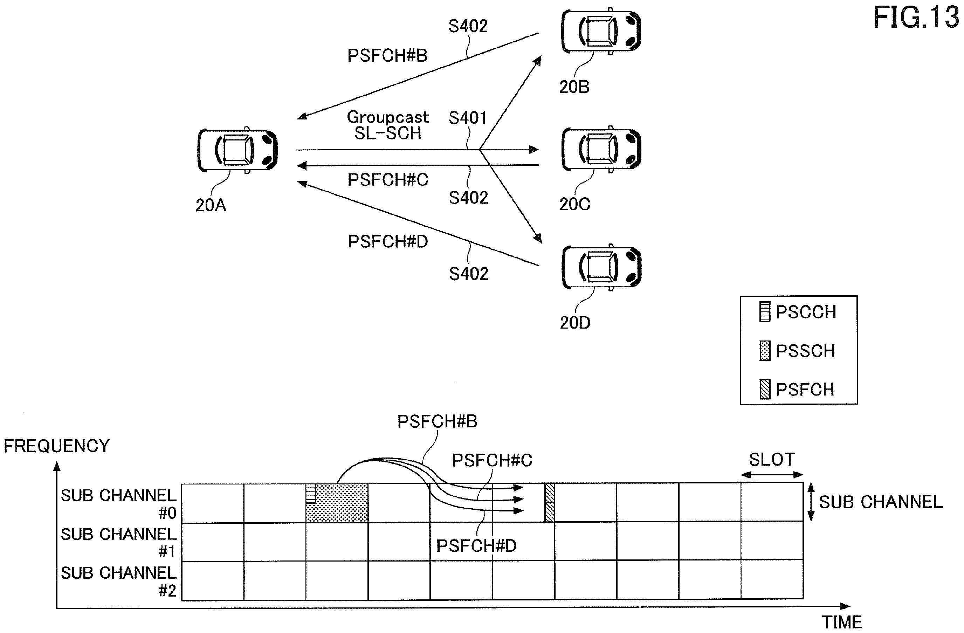

FIG. 13 is a diagram illustrating an operation example (4) according to an embodiment of the present invention. As stated above, transmission of the HARQ response via the PSFCH is supported in the NR sidelink. Note that a format similar to PUCCH (Physical Uplink Control Channel) format 0 is available as the PSFCH format. In other words, in the PSFCH format, the PRB (Physical Resource Block) size is equal to 1, and the ACK and the NACK may be a sequence based format that can be differentiated based on the sequence difference. The PSFCH format is not limited to the above. A resource of the PSFCH may be placed at the last symbol of a slot, or at multiple symbols at the end of a slot. Also, the cycle N may be configured for the PSFCH resource, or may be specified in advance. The cycle N may be configured or specified in advance, in units of slots.

In FIG. 13, the vertical axis corresponds to a frequency domain, and the horizontal axis corresponds to a time domain. The PSCCH may be placed at a first symbol of a slot, at multiple symbols from the first symbol of a slot, or at multiple symbols from a symbol other than the first symbol of a slot. The PSFCH may be placed at the last symbol of a slot, or at multiple symbols at the end of a slot. In the example illustrated in FIG. 13, three subchannels are configured in a resource pool, and the two PSFCHs are placed at the third slot from a slot where the PSSCH is placed. The arrows from the PSSCH to the PSFCHs shows examples of the PSFCHs associated with the PSSCH.

If the HARQ response in NR-V2X group cast is option 2 of transmitting the ACK or NACK, a resource used for transmission and reception of the PSFCH, must be determined. As illustrated in FIG. 13, at step S401, the terminal 20A serving as the transmitting terminal 20 performs group cast to the terminals 20B, 20C and 20D serving as the receiving terminals 20, via an SL-SCH. Then, at step S402, the terminals 20B, 20C and 20D use a PSFCH#B, a PSFCH#C, and a PSFCH#D, respectively, to transmit the HARQ responses to the terminal 20A. Here, as illustrated in the example in FIG. 13, if the number of available PSFCH resources is less than the number of receiving terminals 20 belonging to a group, how to allocate the PSFCH resources, must be determined. Note that the transmitting terminal 20 may acquire the number of receiving terminals 20 in the group cast.

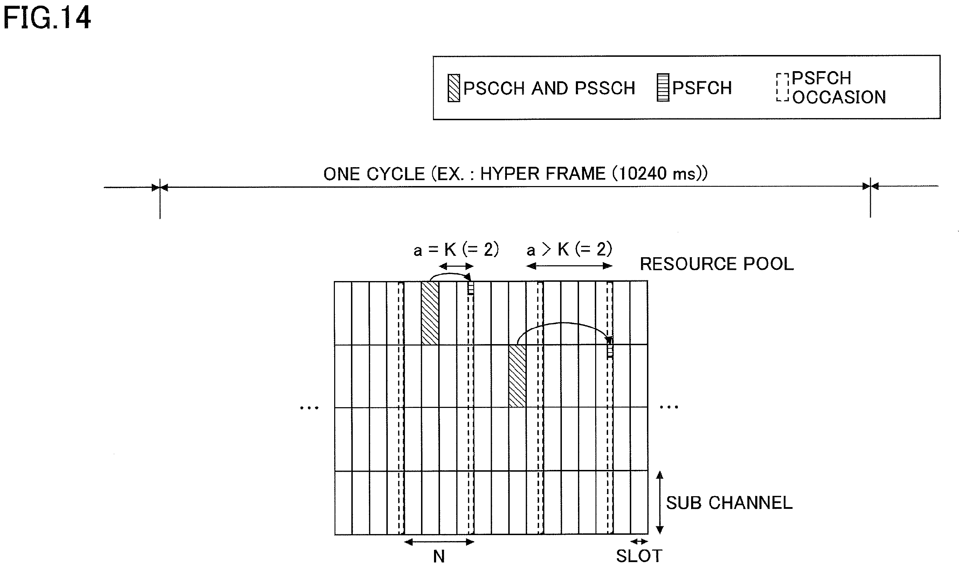

FIG. 14 is a drawing illustrating an example (1) of arrangement of PSFCH. As in step S104 illustrated in FIG. 10, the HARQ response in the sidelink is transmitted from the receiving terminal 20B to the transmitting terminal 20A via PSFCH. In the NR sidelink, for example, the PSFCH occasion is set every N=1, 2 or 4 slots. N may be set or predefined. The HARQ response may also be received or transmitted via the PSFCH that is arranged in the same resource pool as the resource pool for the transmitted PSSCH. The timing of the PSFCH corresponding to the PSSCH transmission at slot n, may be represented by slot n+a. "a" indicates the slot in which the PSFCH occasion is present. For example, it may be a smallest integer that satisfies a>=K. K may be set to 2 or 3, or predefined. K is counted in the logical slot. A logical slot is a slot that is available and contained within a resource pool.

As illustrated in FIG. 14, PSFCH is arranged every N slots in the resource pool. FIG. 14 illustrates an example of N=4. Further, if a=K=2, the HARQ response may be received and transmitted via PSFCH, which is arranged in a second slot after the PSSCH. Alternatively, if a>K=2, the HARQ response may be received and transmitted via the PSFCH arranged in a slot later than the second slot after the PSSCH.

The resource pool configuration may also have a cycle, as illustrated in FIG. 14. For example, the cycle is referred to as a hyper frame and may be a period of 10240 milliseconds. FIG. 14 illustrates a portion of a resource pool within a cycle. The area of the resource pool in the hyper frame may be configured, for example, by a bitmap. The resource pool illustrated in FIG. 14 is an example in which four subchannels are configured, but the number of subchannels may be other than four. This cycle may be called the cycle of the resource pool configuration, or may be called the cycle of the resource pool.

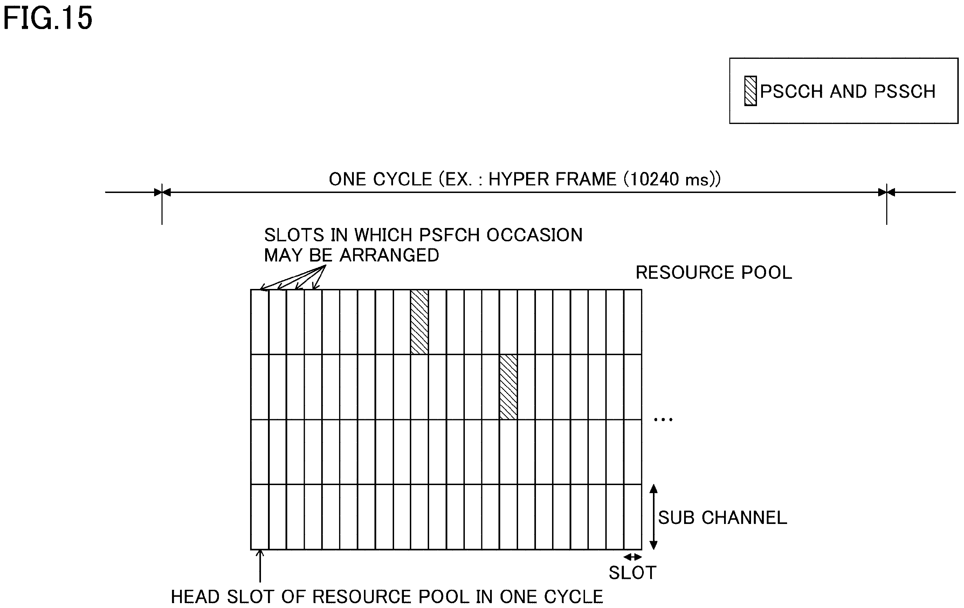

FIG. 15 illustrates an example (2) of the arrangement of PSFCH. As illustrated in FIG. 15, at the beginning of a resource pool of a certain cycle, for example, in a case where N=4, there are four slots in which a PSFCH occasion may be arranged. Therefore, it is necessary to determine which of the first N slots of the resource pool the PSFCH occasion is to be arranged.

Thus, a slot, in which the PSFCH occasion is to be arranged, may be determined based on a specific slot as a starting-point slot. For example, as described in A) and B) below, the slot as the starting-point may be determined.

A) The starting-point is the first slot in the resource pool.
B) The starting-point is the first slot in the cycle of the resource pool configuration.

Further, as illustrated in C), D) and E) below, the slot, in which the PSFCH occasion is to be arranged, may be determined based on the starting-point.

C) The slot that is the starting-point is the slot where the PSFCH occasion is to be arranged, and the PSFCH occasion is repeatedly arranged in a cycle N, starting from this slot.
D) The slot that is positioned N-1 slots after the slot that is the starting-point, is the slot where the PSFCH occasion is to be arranged. The PSFCH occasion is repeatedly arranged in the cycle N, starting from this slot.
E) The slot that is positioned K slots after the slot that is the starting-point, is the slot where the PSFCH occasion is to be arranged. The PSFCH occasion is repeatedly arranged in the cycle N, starting from this slot.

The slots in which PSFCH occasion is arranged according to C), D) or E) above may be limited to the slot included in the resource pool. Also, whether the PSFCH occasion is to be arranged in a slot, may be determined depending on whether PSCCH/PSSCH can be arranged in the slot. For example, if PSCCH/PSSCH can be arranged in a slot, then the slot may be determined as the slot in which the PSFCH occasion is to be arranged.

Any combination of: A) and B) above; and C), D) and E), may be performed. The parameters N and K may be indicated by the base station 10 to the terminal 20, may be configured by the terminal 20, or may be predefined.

Among the resource pools that are repeated in a certain cycle, at least one of the above-mentioned A), B), C), D) and E) may be applied to only a resource pool in a specific cycle, and the slot, in which the PSFCH occasion is arranged in the resource pools in cycles other than the specific cycle, may be determined based on the slot in which the PSFCH occasion is arranged in the specific cycle.

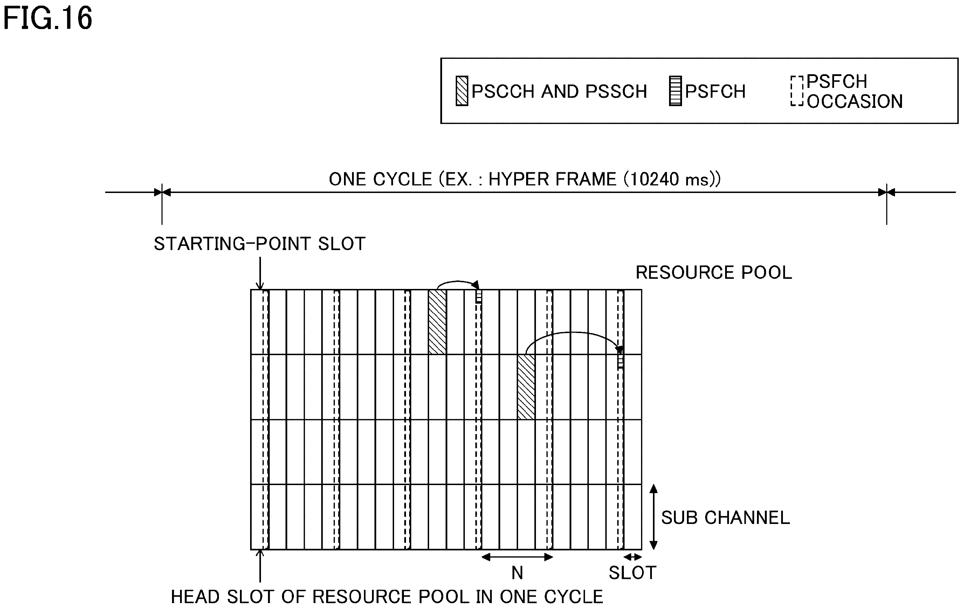

FIG. 16 illustrates an example (1) of the arrangement of PSFCH according to the embodiment of the present invention. An example of the combination of A) and C) is illustrated in FIG. 16. As illustrated in FIG. 16, the first slot in the resource pool may be the slot as the starting-point, the PSFCH occasion may be arranged in the slot as the starting-point, and the PSFCH occasion may be repeatedly arranged in the cycle N, starting from the slot in which the PSFCH occasion is arranged. Note that FIG. 16 is an example of N=4.

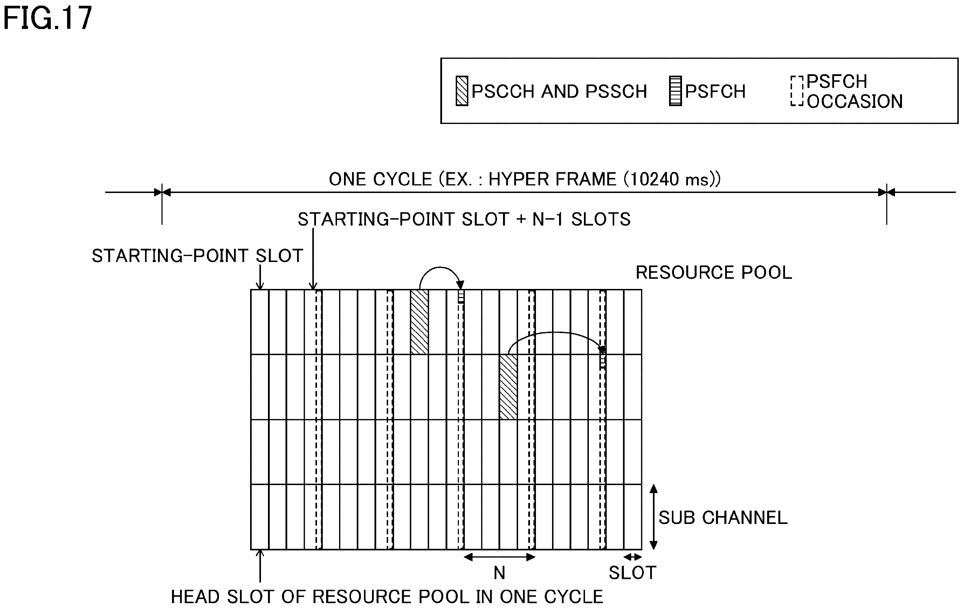

FIG. 17 illustrates an example (2) of the arrangement of PSFCH in the embodiment of the present invention. An example of combining the above A) and D) is illustrated in FIG. 17. As illustrated in FIG. 17, the first slot in the resource pool may be the slot as the starting-point, the PSFCH occasion may be arranged in a slot that is positioned N-1 slots after the slot that is the starting-point, and the PSFCH occasion may be repeatedly arranged in the cycle N, starting from this slot where the PSFCH occasion is arranged. Note that FIG. 17 is an example of N=4.

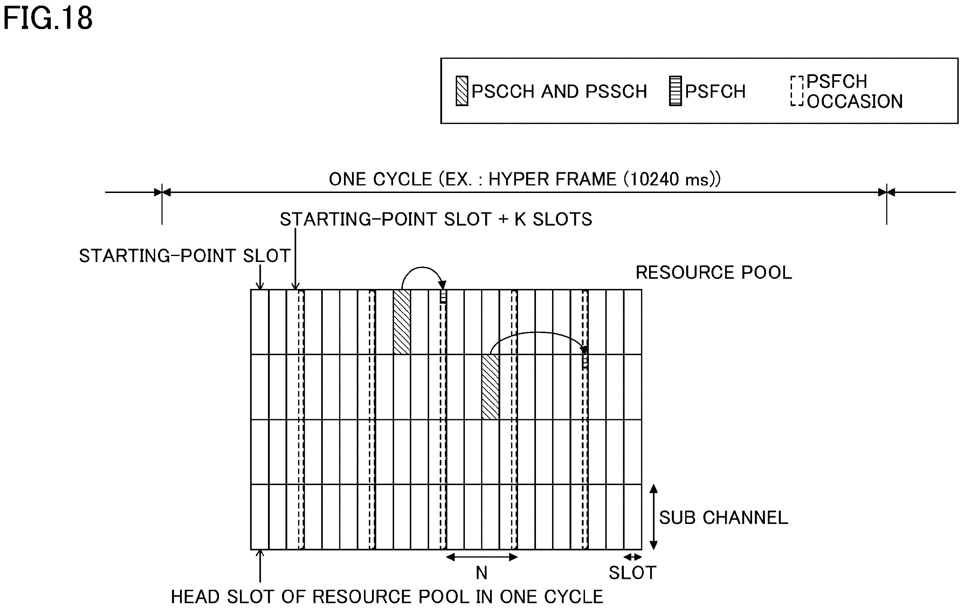

FIG. 18 illustrates an example (3) of the arrangement of PSFCH in the embodiment of the present invention. An example of the combination of A) and E) is illustrated in FIG. 18. As illustrated in FIG. 18, the first slot in the resource pool may be the slot that is the starting-point, the PSFCH occasion may be arranged in a slot that is positioned K slots after the slot that is the starting-point, and the PSFCH occasion may be repeatedly arranged in the cycle N, starting from this slot in which the PSFCH occasion is arranged. Note that FIG. 18 is an example of N=4 and K=2.

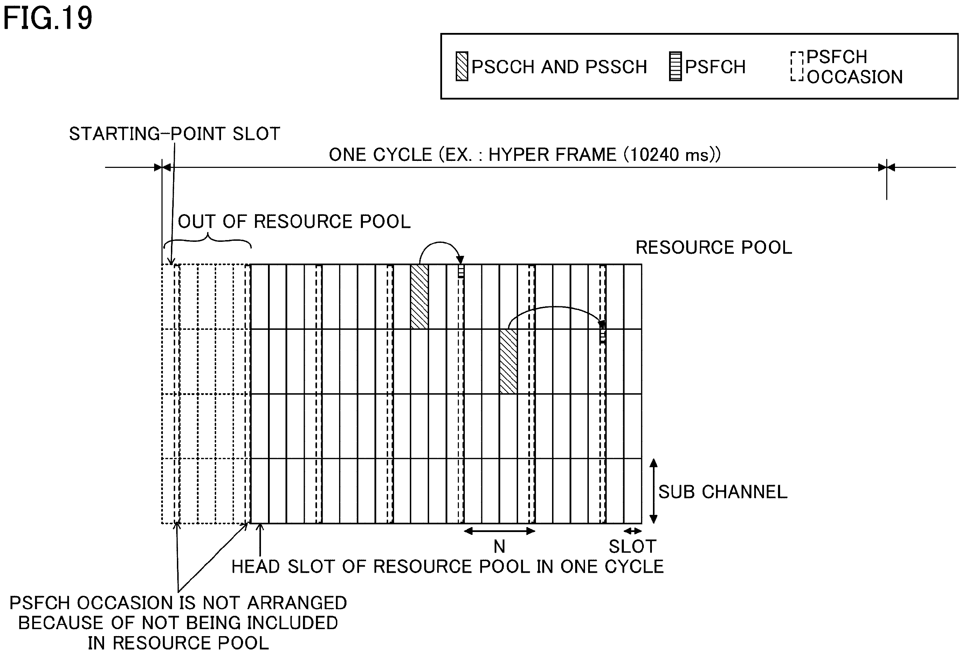

FIG. 19 illustrates an example (4) of the arrangement of PSFCH in the embodiment of the present invention. An example of the combination of B) and C) is illustrated in FIG. 19. As illustrated in FIG. 19, the first slot in the cycle of the resource pool configuration may be the slot that is the starting-point, the PSFCH occasion may be arranged in the slot that is the starting-point, and the PSFCH occasion may be repeatedly arranged in the cycle N, starting from this slot in which the PSFCH occasion is arranged. As illustrated in FIG. 19, the first PSFCH occasion and the next PSFCH occasion that are not included in the resource pool, are not required to be a PSFCH occasion. That is, the leading PSFCH occasion and subsequent PSFCH occasion not included in the resource pool may be determined to be invalid. Note that FIG. 19 is an example of N=4.

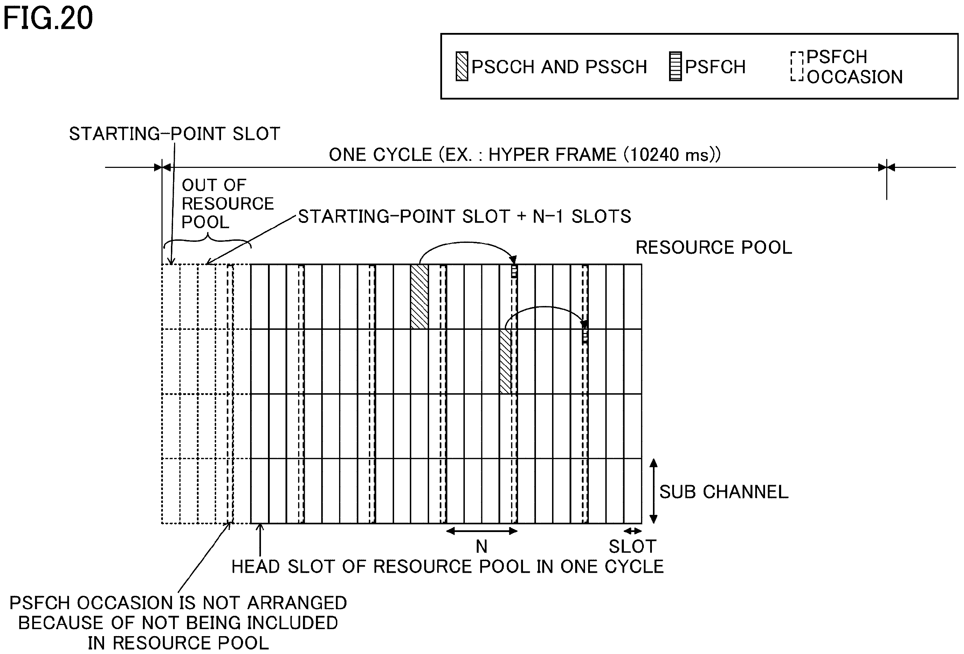

FIG. 20 illustrates an example (5) of the arrangement of the PSFCH in the embodiment of the present invention. An example of a combination of B) and D) is illustrated in FIG. 20. As illustrated in FIG. 20, the first slot in the cycle of the resource pool configuration may be determined to be the starting-point slot, the PSFCH occasion may be arranged in a slot that is positioned N-1 slots after the starting-point slot, and the PSFCH occasion may be repeatedly arranged in the cycle N, starting from this slot in which the PSFCH occasion is arranged. As illustrated in FIG. 20, the first PSFCH occasion not included in the resource pool is not required to be a PSFCH occasion. That is, the first PSFCH occasion not included in the resource pool may be determined to be invalid. Note that FIG. 20 is an example in a case where N=4.

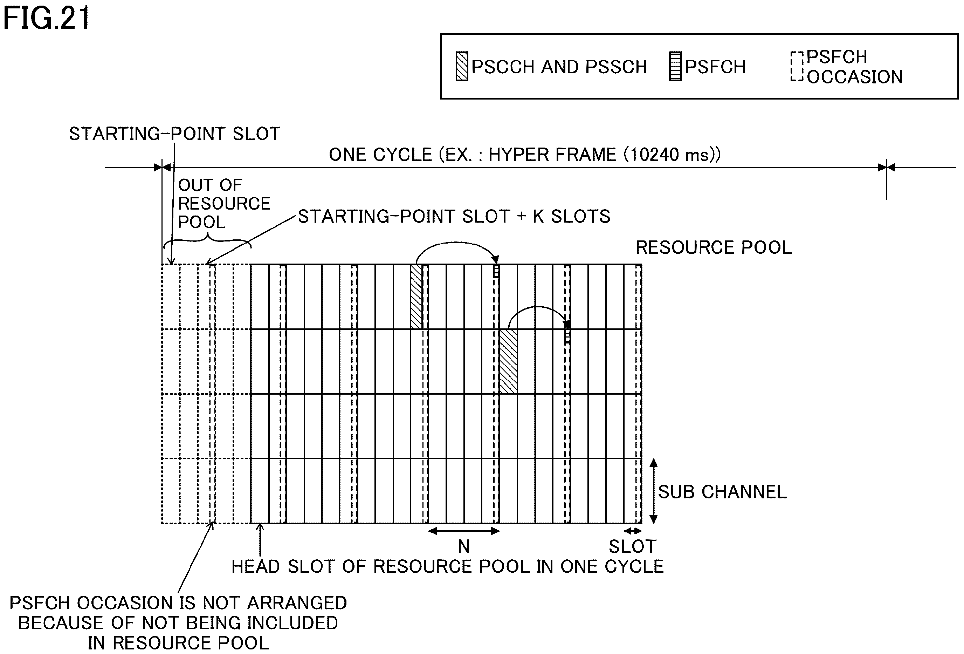

FIG. 21 illustrates an example (6) of the arrangement of the PSFCH in the embodiment of the present invention. An example of a combination of B) and E) is illustrated in FIG. 21. As illustrated in FIG. 21, the first slot in the cycle of the resource pool configuration may be the starting-point slot, the PSFCH occasion may be arranged in a slot that is positioned K slots after the starting-point, and the PSFCH occasion may be repeatedly arranged in the cycle N, starting from this slot in which the PSFCH occasion is arranged. As illustrated in FIG. 21, the first PSFCH occasion not included in the resource pool is not required to be a PSFCH occasion. That is, the first PSFCH occasion not included in the resource pool may be determined to be invalid. Note that FIG. 21 is an example in a case where N=4 and K=2.

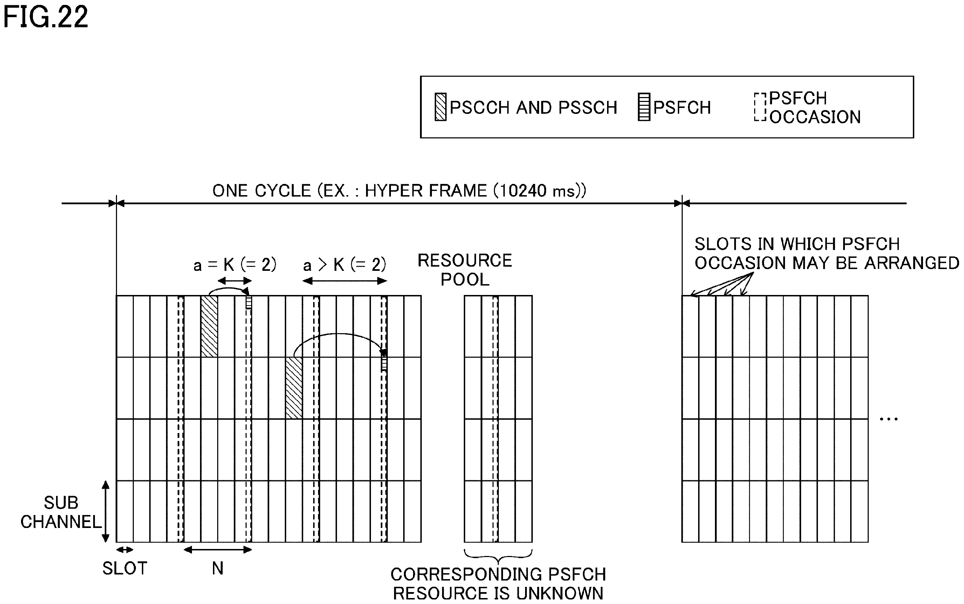

FIG. 22 illustrates an example (3) of the arrangement of PSFCH. As illustrated in FIG. 22, the arrangement of the PSFCH slots is not clearly defined near the boundary of the cycles of the resource pool configuration. For example, in a case where N=4, there are four slots, in which the PSFCH occasion may be arranged, at the beginning of the resource pool of a cycle subsequent to a certain cycle. Therefore, it is necessary to determine which of the first N slots at the beginning of the resource pool of a cycle subsequent to the certain cycle, is to be a slot in which the PSFCH occasion is arranged.

In addition, in a case where PSCCH/PSSCH resources within a certain cycle do not have a corresponding PSFCH occasion in the resource pool of that cycle, it is necessary to determine how to process the HARQ response. It is also necessary to determine which slot is to be a slot in which the first PSFCH occasion in the resource pool is to be arranged.

Thus, the configurations or operations illustrated in the following F), G), H) and I) may be performed.

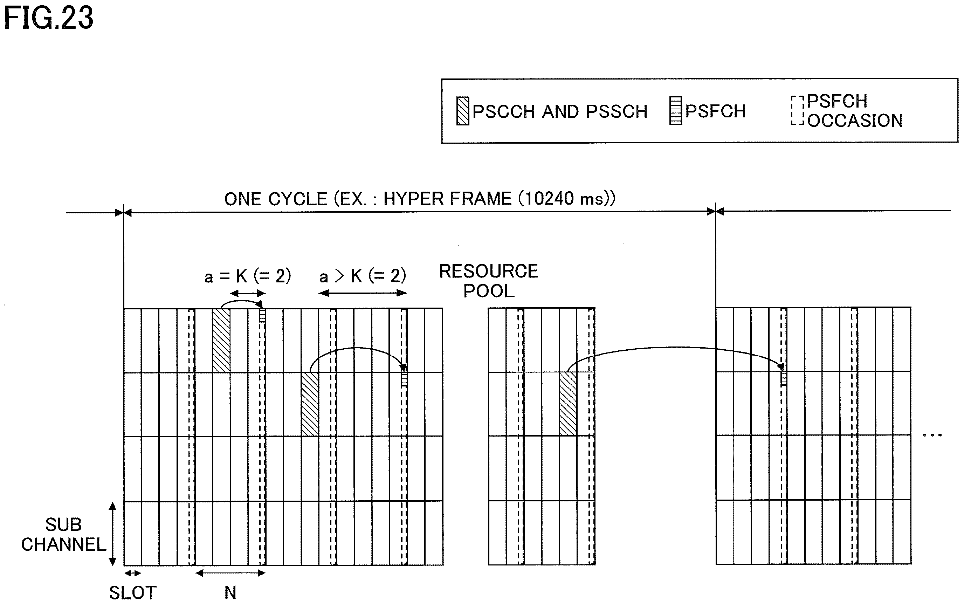

F) The number of slots in one cycle of the resource pool may be a multiple of N. For example, in a case where M is a positive integer and N=2, 2M slots may be configured or predefined to be available in one cycle of the resource pool, and in a case where N=4, 4M slots may be configured or predefined to be available in one cycle of the resource pool. FIG. 23 illustrates an example (7) of the arrangement of the PSFCH in the embodiment of the present invention. FIG. 23 is an example of the resource pool in a case where N=4. As illustrated in FIG. 23, the number of slots in the resource pool in one cycle is a multiple of N. Also, as illustrated in FIG. 23, PSCCH/PSSCH and the HARQ feedback may be arranged on opposite sides of the boundary of the cycles of the resource pool configuration.

By performing the configurations illustrated in the above F), there are provided PSFCH resources corresponding to all PSCCH/PSSCHs in the resource pool. In addition, it is possible to maintain the timing of the PSFCH at each cycle of the resource pool, thereby reducing the impact on sidelink scheduling.

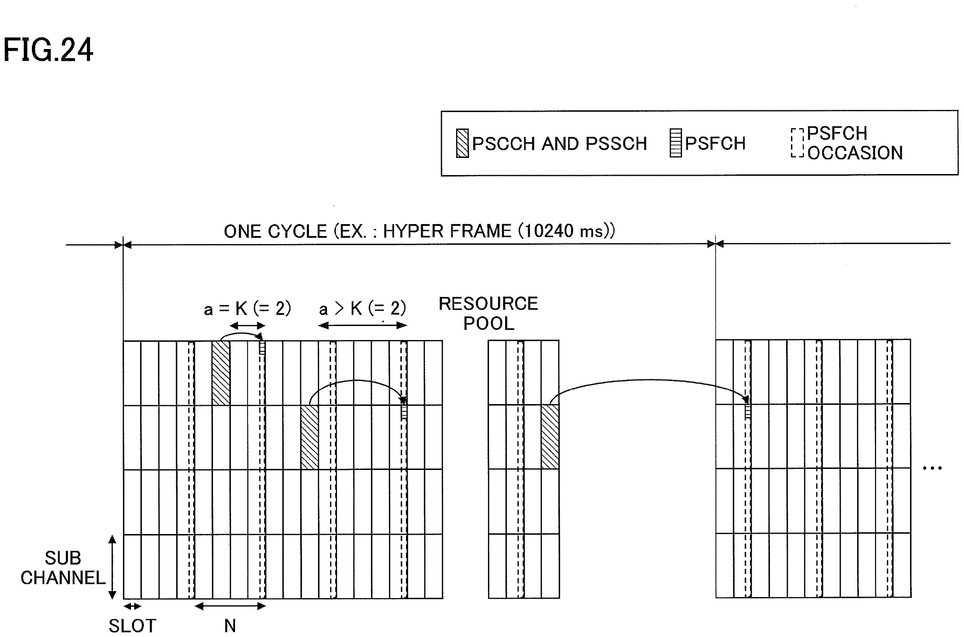

G) Counting of the number of the interval slots between PSFCH occasions may be performed across the cycles of the resource pool. That is, terminal 20 may count the number of interval slots between the PSFCH occasions over a certain cycle of the resource pool and the subsequent cycle of the resource pool. FIG. 24 illustrates an example (8) of the arrangement of PSFCH in an embodiment of the present invention. FIG. 24 is an example of a resource pool in a case where N=4. As illustrated in FIG. 24, in a case where the PSFCH occasion is arranged in a slot two slots before the last slot of the resource pool of a certain cycle, the PSFCH occasion may be arranged in the second slot, counting from the first slot, of the resource pool of the subsequent cycle. Also, as illustrated in FIG. 24, the PSCCH/PSSCH and the corresponding HARQ feedback may be arranged on opposite sides of the boundary of the cycles of the resource pool configuration. In this case, as a condition in which the carrier of DL or UL and the carrier of the sidelink are matched, the Slot Frame Number #0 and/or the slot index #0 may be matched with the Direct Frame Number #0 and/or the slot index #0, and specific numbers may be matched. The specific number may be, for example, a number in frames of 10240 ms (e.g., hyper frames).

Performing the operations illustrated in the above G) enables to provide corresponding PSFCH resources for all PSCCH/PSSCHs in the resource pool.

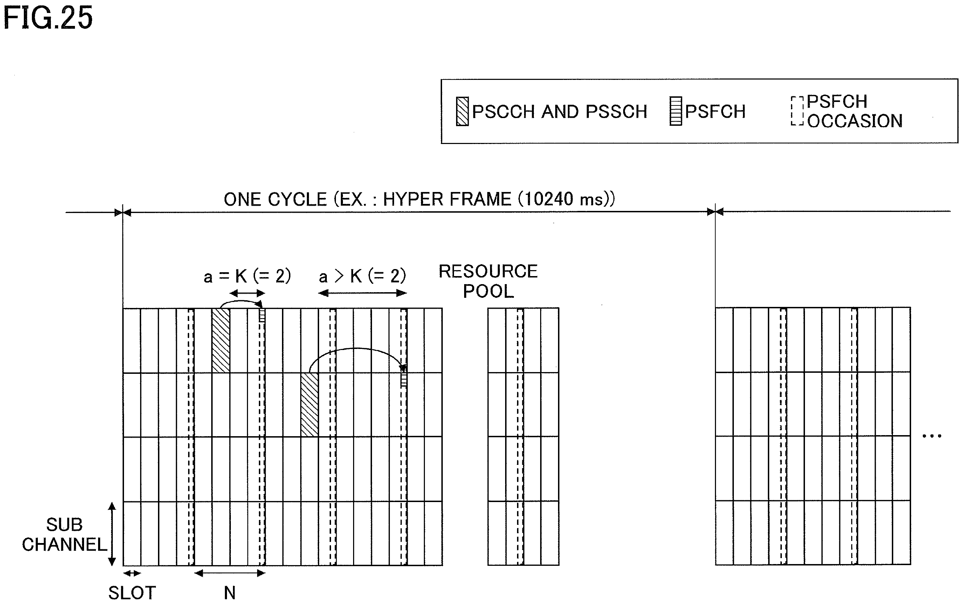

H) Counting of the number of the interval slots between PSFCH occasions may be performed independently for each cycle of the resource pool. FIG. 25 illustrates an example (9) of the arrangement of the PSFCH in the embodiment of the present invention. FIG. 25 is an example of the resource pool in a case where N=4. As illustrated in FIG. 25, for example, even in a case where the PSFCH occasion is arranged in a slot two slots before the last slot of the resource pool of a certain cycle, the first PSFCH occasion in the resource pool of the subsequent cycle may be arranged in the fourth slot, independently from the position of the above-described PSFCH occasion. Note that the PSCCH/PSSCH and the corresponding HARQ feedback may be arranged on opposite sides of the boundary of the cycles of the resource pool configuration, or the arrangement on opposite sides of the boundary of the cycles of the resource pool configuration, may be prohibited.

When the PSCCH/PSSCH and the corresponding HARQ feedback are arranged on opposite sides of the boundary of the cycles of resource pool configuration, for example, in a case where the number of slots in one cycle of the resource pool is not a multiple of N, the PSFCH corresponding to the HARQ feedback, may have a time domain and/or frequency domain and/or code domain other than the PSFCH resource corresponding to the transmission in the PSCCH/PSSCH resource in the subsequent cycle. Alternatively, transmission may be performed together with PSCCH/PSSCH/PSFCH in the resource pool of the subsequent cycle.

When the arrangement of the PSCCH/PSSCH and the corresponding HARQ feedback on opposite sides of the boundary between the cycles of the resource pool configuration, is prohibited, for example, the transmission in the PSCCH/PSSCH resource without corresponding PSFCH resource need not require the HARQ feedback, or the receiving UE need not provide the HARQ feedback even if the HARQ feedback is requested, or only a broadcast may be allowed.

Performing the configurations illustrated in the above H) enables to provide corresponding PSFCH resources for all PSCCH/PSSCHs in the resource pool. In addition, it is possible to maintain the timing of PSFCH at each cycle of the resource pool, thereby reducing the impact on sidelink scheduling.

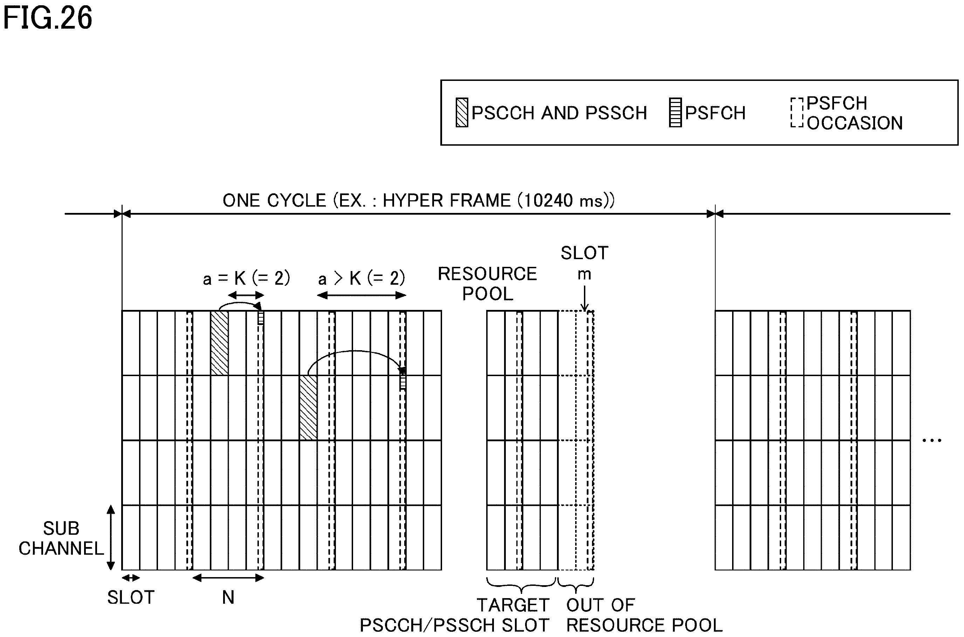

I) A PSFCH slot m corresponding to the PSCCH/PSSCH slot set as the resource pool may be used even if the slot m is not set in the resource pool as a PSCCH/PSSCH resource. FIG. 26 illustrates an example (10) of the arrangement of the PSFCH in the embodiment of the present invention. For example, even if the slot m is located out of the resource pool as illustrated in FIG. 26, the slot m may be used as the corresponding PSFCH resource for the transmission in a target PSCCH/PSSCH slot within the resource pool.

In addition, when a corresponding PSFCH slot is determined by a logical slot in each cycle of the resource pool, the above H) may be applied only if the corresponding PSFCH slot for the PSCCH/PSSCH slot is not present in the resource pool of that cycle. In this case, the corresponding PSFCH slot may be determined by a physical slot. The logical slot is an available slot, and is a slot included in the resource pool. The physical slot is an actual slot and corresponds to all the slots in a carrier. Alternatively, when the corresponding PSFCH slot is determined by the logical slot, the above H) may be applied only if the corresponding PSFCH slot is in the resource pool of the subsequent cycle and/or the corresponding PSFCH resource is not present in the resource pool of the subsequent cycle (e.g., the number of the PSFCH resources is insufficient). In this case, the corresponding PSFCH slot may be determined by the physical slot.

The above I) may be performed in combination with F), G) or H) above.

Performing the configurations illustrated in the above I) enables to provide corresponding PSFCH resources for all PSCCH/PSSCHs in the resource pool.

In accordance with the embodiment described above, the terminal 20 can clarify the timing of the PSFCH arranged in the resource pool. In addition, corresponding PSFCH resources are provided for all PSCCH/PSSCH in the resource pool.

That is, in the direct terminal-to-terminal communication, the channel, in which the HARQ response in the direct terminal-to-terminal communication is transmitted, can be appropriately arranged.

### (Apparatus configuration)

Next, a functional configuration example of the base station 10 and the terminal 20 for performing the processes and operations described above will be described. The base station 10 and terminal 20 include functions for implementing the embodiments described above. However, each of the base station 10 and the terminal 20 may include only some of the functions in the embodiment.

### <Base station 10>

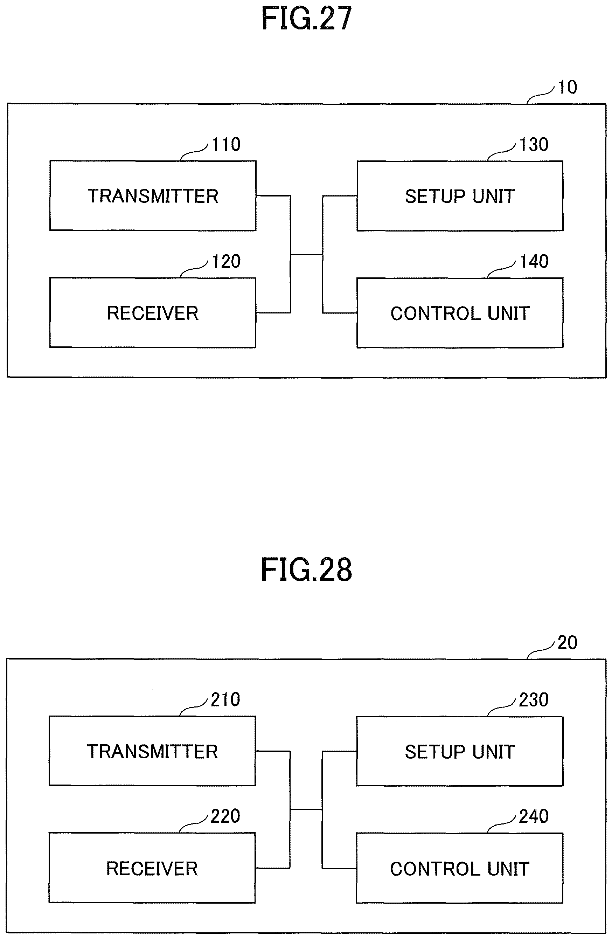

FIG. 27 illustrates an example of a functional configuration of the base station 10. As illustrated in FIG. 27, the base station 10 includes a transmitting unit 110, a receiver 120, a setup unit 130, and a control unit 140. The functional configuration illustrated in FIG. 27 is only one example. If the operation according to the embodiment of the present invention can be performed, the category of the function and the name of the functional unit may be any.

The transmitter 110 includes a function for generating a signal to be transmitted to the side of the terminal 20 and transmitting the signal wirelessly. The receiver 120 includes a function for receiving various signals transmitted from the terminal 20 and acquiring, for example, information of a higher layer from the received signals. The transmitter 110 has a function to transmit NR-PSS, NR-SSS, NR-PBCH, DL/UL control signals, DL reference signals, and the like to the terminal 20.

The setup unit 130 stores the preset setup information and various setup information to be transmitted to the terminal 20 in a memory device and reads the preset setup information from the memory device if necessary. The contents of the setup information are, for example, information pertaining to the configuration of the D2D communication.

As described in the embodiment, the control unit 140 performs processing pertaining to the configuration in which the terminal 20 performs the D2D communication. The control unit 140 transmits scheduling of D2D communication and DL communication to the terminal 20 through the transmitter 110. The control unit 140 receives information pertaining to the HARQ response of the D2D communication and the DL communication from the terminal 20 via the reception unit 120. A function unit related to signal transmission in the control unit 140 may be included in the transmitter 110, and a function unit related to signal reception in the control unit 140 may be included in the receiver 120.

### <Terminal 20>

FIG. 28 illustrates an example of a functional configuration of the terminal 20. As illustrated in FIG. 28, the terminal 20 includes a transmitter 210, a receiver 220, a setup unit 230, and a control unit 240. The functional configuration illustrated in FIG. 28 is only one example. If the operation according to the embodiment of the present invention can be performed, the functional category and the name of the functional unit may be any one.

The transmitter 210 creates a transmission signal from the transmission data and wirelessly transmits the transmission signal.
The receiver 220 receives various signals wirelessly and acquires signals from higher layers from the received signal of the physical layer. The receiver 220 has a function to receive NR-PSS, NR-SSS, NR-PBCH, DL/UL/SL control signals or reference signals transmitted from the base station 10. For example, the transmitter 210 transmits PSCCH (Physical sidelink Control Channel), PSSCH (Physical sidelink Shared Channel), PSDCH (Physical sidelink Discovery Channel), PSBCH (Physical sidelink Broadcast Channel), and the like to the other terminal 20 as D2D communication, and the receiver 220 receives PSCCH, PSSCCH, PSDCH, PSDCH, and the like from the other terminal 20.

The setup unit 230 stores various setup information received from the base station 10 or the terminal 20 by the receiver 220 in the memory device and reads it from the memory device as necessary. The setup unit 230 also stores preset setup information. The contents of the setup information are, for example, information pertaining to the configuration of D2D communication.

The control unit 240 controls D2D communication with other terminals 20 as described in the embodiment. The control unit 240 performs processing related to the HARQ of D2D communication and DL communication. The control unit 240 transmits information pertaining to the HARQ response of the D2D communication and the DL communication to the other terminal 20 scheduled from the base station 10. The control unit 240 may schedule D2D communication to the other terminal 20. The control unit 240 may autonomously select resources used for D2D communication from the resource selection window based on the sensing result. The control unit 240 performs processing pertaining to the MCS when transmitting and receiving the D2D communication. A function unit related to signal transmission in the control unit 240 may be included in the transmitter 210, and a function unit related to signal reception in the control unit 240 may be included in the receiver 220.

### (Hardware configuration)

Block diagrams (FIGS. 27 and 28) used in the description of the above embodiments illustrates blocks of functional units. These functional blocks (components) are implemented by any combination of hardware and/or software. In addition, the implementation method of each function block is not particularly limited. That is, each functional block may be implemented using a single device that is physically or logically combined, or two or more devices that are physically or logically separated may be directly or indirectly connected (e.g., using wired, wireless, etc.) and implemented using these multiple devices. The functional block may be implemented by combining software with the device or devices.

Functions include, but are not limited to, judgment, determination, computing, calculation, processing, derivation, research, search, verification, reception, transmission, output, access, resolution, selection, establishment, comparison, assumption, expectation, and deeming; broadcasting, notifying, communicating, forwarding, configuring, reconfiguring, allocating, mapping, and assigning. For example, a functional block (component) that functions to transmit is called the transmitter (a transmitting unit). In either case, as described above, the realization method is not particularly limited.

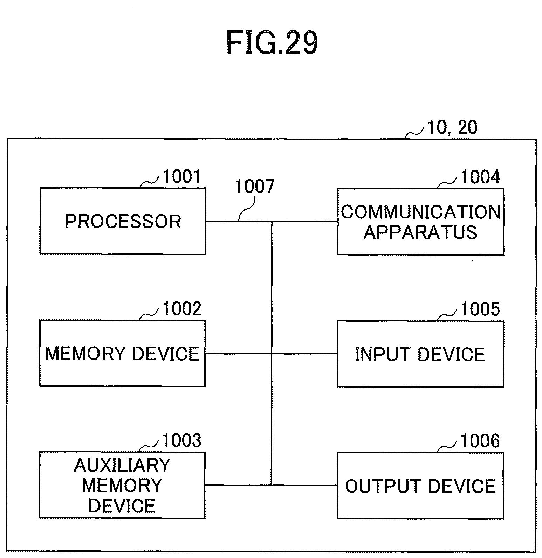

For example, the base station 10, terminal 20, etc., according to an embodiment of the present disclosure may function as a computer for processing the radio communication method of the present disclosure. FIG. 29 illustrates an example of the hardware configuration of the base station 10 and the terminal 20 according to an embodiment of the present disclosure. The base station 10 and the terminal 20 described above may be physically configured as a computer device including a processor 1001, a memory device 1002, an auxiliary memory device 1003, a communication apparatus 1004, an input device 1005, an output device 1006, a bus 1007, and the like.

In the following description, the term "apparatus" can be read as a circuit, device, unit, etc. The hardware configuration of the base station 10 and terminal 20 may be configured to include one or more of the devices illustrated in the figure. or may be configured without some of the devices.

The functions in the base station 10 and the terminal 20 are realized by performing operations by the processor 1001 by reading predetermined software (programs) on hardware such as the processor 1001 and the memory device 1002, and controlling communications by the communication apparatus 1004 and controlling at least one of reading and writing of data in the memory device 1002 and the auxiliary memory device 1003.

For example, the processor 1001 controls the entire compute by invoking the operating system in its entirety. The processor 1001 may be formed by a central processing unit (CPU) including an interface with peripheral devices, a control unit, an arithmetic unit, a register, and the like. For example, the above described control unit 140, control unit 240, and the like may be implemented by the processor 1001.

The processor 1001 reads out a program (a program code), software module, data, or the like from at least one of the auxiliary memory device 1003 and the communication apparatus 1004 to the memory device 1002 and performs various processing accordingly. A program that causes a computer to execute at least a part of the operation described in the above embodiment is used. For example, the control unit 140 of the base station 10 illustrated in FIG. 27 may be stored in the memory device 1002 and implemented by a control program operating in the processor 1001. For example, the control unit 240 of the terminal 20 illustrated in FIG. 28 may be stored in the memory device 1002 and implemented by the control program operating in the processor 1001.
Although the foregoing processes have been described and executed by one processor 1001, they may be executed simultaneously or sequentially by two or more processors 1001. The processor 1001 may be implemented by one or more chips. The program may be transmitted from the network via a telecommunication line.

The memory device 1002 is a computer-readable recording medium and may be formed by at least one of, for example, ROM (Read Only Memory), EPROM (Erasable Programmable ROM), EEPROM (Electrically Erasable Programmable ROM), RAM (Random Access Memory), and the like. The memory device 1002 may be referred to as a register, cache, main memory (main memory), or the like. The memory device 1002 can store a program (program codes), software modules, etc., that is executable to perform a communication method according to the embodiment of the present disclosure.

The auxiliary memory device 1003 is a computer-readable recording medium and may be formed by at least one of an optical disk, such as a CD-ROM (Compact Disc ROM), a hard disk drive, a flexible disk, a magneto-optical disk (e.g., a compact disk, a digital versatile disk, a Blu-ray disk (Blu-ray is a registered trademark), a smart card, a flash memory (e.g., a card, a stick, a key drive), a floppy disk ("floppy disk" is a registered trademark), a magnetic strip, and the like. The recording medium described above may be, for example, a database, a server, or other suitable medium that includes at least one of the memory device 1002 and the auxiliary memory device 1003.

The communication apparatus 1004 is hardware (transmitting/receiving device) for performing communications between computers via at least one of a wired network and a wireless network, and is also referred to as a network device, a network controller, a network card, a communication module, or the like. The communication apparatus 1004 may be formed by a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting and receiving unit, the transmission line interface, and the like may be implemented by the communication apparatus 1004. The transmitting and receiving unit may be physically or logically may be installed so as to be physically or logically isolated.

The input device 1005 is an input device (e.g., a keyboard, mouse, microphone, switch, button, sensor, etc.) that accepts external input. The output device 1006 is an output device (e.g., a display, speaker, LED lamp, etc.) that performs an external output. The input device 1005 and the output device 1006 may have an integral configuration (for example, a touch panel).

Each device such as the processor 1001 and memory device 1002 is connected by the bus 1007 for communicating information. The bus 1007 may be configured using a single bus or using buses different for each device.

The base station 10 and terminal 20 may also include hardware such as a microprocessor, a digital signal processor (DSP), an ASIC (Application Specific Integrated Circuit), a PLD (Programmable Logic Device), an FPGA (Field Programmable Gate Array), and some or all of the functional blocks may be realized by the hardware. For example, the processor 1001 may be installed using at least one of these pieces of hardware.

### (Summary of Embodiments)

As described above, according to the embodiment of the present invention, a terminal including a control unit that determines candidate slots, in which a channel for transmitting and receiving a response related to a retransmission process is arranged, based on a specific slot located before and after a boundary of a cycle of a resource pool, a transmission unit that transmits a data channel to another terminal via the resource pool, and a receiver that receives the response related to the retransmission process corresponding to the data channel from the another terminal via the channel for transmitting and receiving the response related to the retransmission process, the channel being configured in one of the candidate slots, is provided.

With the above configuration, the terminal 20 can determine the timing of the PSFCH arranged in the resource pool. In addition, corresponding PSFCH resources are provided for all PSCCH/PSSCHs in the resource pool. That is, in the direct terminal-to-terminal communication, the channel in which the HARQ response in the direct terminal-to-terminal communication is transmitted, can be appropriately arranged.

### (Summary of Embodiments)

As described above, according to the embodiment of the present invention, a terminal including a control unit that determines candidate slots, in which a channel for transmitting and receiving a response related to a retransmission process is arranged, based on a specific slot located before and after a boundary of a cycle of a resource pool, a transmission unit that transmits a data channel to another terminal via the resource pool, and a receiver that receives the response related to the retransmission process corresponding to the data channel from the another terminal via the channel for transmitting and receiving the response related to the retransmission process, the channel being configured in one of the candidate slots, is provided.

With the above configuration, the terminal 20 can determine the timing of the PSFCH arranged in the resource pool. In addition, corresponding PSFCH resources are provided for all PSCCH/PSSCHs in the resource pool. In other words, in the direct terminal-to-terminal communication, the channel in which the HARQ response in the direct terminal-to-terminal communication is transmitted, can be appropriately arranged.

### (Supplemental embodiments)

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiment, the orders of steps may be changed unless a contradiction arises. For the sake of convenience for describing the processing, the base station 10 and the terminal 20 have been described with the use of the functional block diagrams, but these apparatuses may be implemented by hardware, software, or a combination thereof. Each of software functioning with a processor of the base station apparatus 10 according to the embodiment of the present invention and software functioning with a processor of the user equipment 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (a MIB (Master Information Block) and a SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also, a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an example order and the methods are not limited to the specific orders presented.

The specific operations performed by the base station 10 described in the present disclosure may in some cases be performed by an upper node. It is clear that, in a network that includes one or more network nodes including the base station 10, various operations performed for communication with the terminal 20 can be performed by at least one of the base station 10 and another network node other than the base station 10 (for example, a MME, a S-GW, or the like may be mentioned, but not limited thereto). In the above, the description has been made for the case where another network node other than the base station 10 is a single node as an example. However, the other network node may be a combination of a plurality of other network nodes (for example, an MME and a S-GW).

Information, signals, or the like described in the present disclosure may be output from an upper layer (or a lower layer) to a lower layer (or an upper layer). Information, signals, or the like described in the present disclosure may be input and output via a plurality of network nodes.

Information or the like that has been input or output may be stored at a predetermined location (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a subprogram, a software module, an application, a software application, a software package, a routine, a subroutine, an object, an executable file, an execution thread, a procedure, a function, and the like.

Also, software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling). A signal may be a message. A component carrier (CC) may be referred to as a carrier frequency, a cell, a frequency carrier, or the like.

The terms "system" and "network" used in the present disclosure are used interchangeably.

Also, information, parameters, and the like described in the present disclosure may be expressed by absolute values, may be expressed by relative values with respect to predetermined values, and may be expressed by corresponding different information. For example, radio resources may be indicated by indices.

The above-described names used for the parameters are not restrictive in any respect. In addition, formulas or the like using these parameters may be different from those explicitly disclosed in the present disclosure. Various channels (for example, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point" , "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells. In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication device, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type). It is noted that at least one of a base station and a mobile station includes an apparatus that does not necessarily move during a communication operation. For example, at least one of a base station and a mobile station may be an IoT (Internet of Things) device such as a sensor.

In addition, a base station according to the present disclosure may be read as a user terminal. For example, each aspect or embodiment of the present disclosure may be applied to a configuration in which communication between a base station and a user terminal is replaced by communication between a plurality of user equipments 20 (that may be called D2D (Device-to-Device), V2X (Vehicle-to-Everything), or the like). In this case, a user equipment 20 may have above-described functions of the base station apparatus 10. In this regard, a word such as "up" or "down" may be replaced with a word corresponding to communication between terminals (for example, "side"). For example, an uplink channel, a downlink channel, or the like may be replaced with a side channel.

Similarly, a user terminal according to the present disclosure may be read as a base station. In this case, a base station may have above-described functions of the user terminal.

The term "determining" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "Determining" may be read as "assuming", "expecting", "considering", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above-described apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of numerology.

The numerology may be a communication parameter that is applied to at least one of transmission and reception of a signal or a channel. The numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in a frequency domain, a specific windowing processing performed by a transceiver in a time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on the numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit for transmitting a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the conventional LTE, may have a period shorter than 1 ms (e.g., 1 to 13 symbols), and may have a period longer than 1 ms. Instead of subframes, units expressing a TTI may be referred to as slots, minislots, or the like.

A TTI means, for example, a minimum time unit of scheduling in radio communication. For example, in an LTE system, a base station performs scheduling for each user equipment 20 to allocate, in TTI units, radio resources (such as frequency bandwidths, transmission power, and the like that can be used by each user equipment 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, a normal TTI, a subframe, and the like) may be read as TTI having a time length exceeding 1 ms, and a short TTI (for example, a shortened TTI) may be read as a TTI having a TTI length less than the TTI length of the long TTI and equal to or more than 1 ms.

A resource block (RB) is a resource allocation unit in terms of a time domain and a frequency domain and may include one or a plurality of consecutive subcarriers in terms of frequency domain. The number of subcarriers included in an RB may be the same regardless of the numerology, and, for example, may be 12. The number of subcarriers included in a RB may be determined based on the numerology.

Also, in terms of the time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

Also, a resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for certain numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of configured BWPs may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following the article is of a plural form.

Throughout the present disclosure, an expression that "A and B are different" may mean that "A and B are different from each other". Also, this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information

(for example, notification of "being x") may be implemented not only explicitly but also implicitly (for example, by not notifying predetermined information).

The PSFCH in this disclosure is an example of a channel for transmitting and receiving a response related to a retransmission process. The PSFCH occasion is an example of a candidate channel in which a retransmission response is sent and received. PSSCH is an example of a data channel.

While the present disclosure has been described in detail above, those skilled in the art will appreciate that the present disclosure is not limited to the embodiments described in the present disclosure. The disclosure may be implemented as modifications and variations without departing from the spirit and scope of the disclosure as defined by the claims. Accordingly, the description of the present disclosure is for illustrative purposes only and is not intended to have any restrictive meaning with respect to the present disclosure.

### [Description of Symbols]

10 Base station
110 Transmitter
120 Receiver
130 Setup unit
140 Controller
20 Terminal
210 Transmitter
220 Receiver
230 Setup unit
240 Control unit
1001 Processor
1002 Memory device
1003 Auxiliary memory device
1004 Communication apparatus
1005 Input device
1006 Output device

## Claims

1. A terminal comprising:
a control unit that determines candidate slots, in which a channel for transmitting and receiving a response related to a retransmission process is arranged, the candidate slots being located before and after a boundary of a cycle of a resource pool;
a transmitter that transmits a data channel to another terminal via the resource pool; and
a receiver that receives the response related to the retransmission process corresponding to the data channel from the another terminal via the channel for transmitting and receiving the response related to the retransmission process, the channel being configured in one of the candidate slots.

2. The terminal according to claim 1,
wherein a number of slots included in the resource pool is a multiple of the cycle.

3. The terminal according to claim 1,
wherein the control unit counts a spacing of the candidate slots, continuously across a certain resource pool and a resource pool of a cycle subsequent to the certain resource pool.

4. The terminal according to claim 1,
wherein the control unit counts a spacing of the candidate slots, independently between a certain resource pool and a resource pool of a cycle subsequent to the certain resource pool.

5. The terminal according to any one of claims 2 to 4,
wherein the receiver receives the response related to the retransmission process corresponding to the data channel from the another terminal, in a resource pool of a cycle subsequent to a resource pool including the data channel.

6. A communication method performed by a terminal, the method comprising:
determining candidate slots, in which a channel for transmitting and receiving a response related to a retransmission process is arranged, the candidate slots being located before and after a boundary of a cycle of a resource pool;
transmitting a data channel to another terminal via the resource pool; and
receiving the response related to the retransmission process corresponding to the data channel from the another terminal via the channel for transmitting and receiving the response related to the retransmission process, the channel being configured in one of the candidate slots.
